# EUROPÄISCHE PATENTSCHRIFT

(11) **EP 1 121 850 B1**
(45) Veröffentlichungstag und Bekanntmachung des Hinweises auf die Patenterteilung: **08.04.2009**
(21) Anmeldenummer: 01101883.5
(22) Anmeldetag: 27.01.2001
(51) Int. Cl.: A01F 15/07

(54) **Rollballenpresse für landwirtschaftliche Halmgüter**
Rotobaler for agricultural product
Presse à balles rondes pour des produits agricoles

(30) Priorität: 02.02.2000 DE 10004563
(43) Veröffentlichungstag der Anmeldung: 08.08.2001
(73) Patentinhaber: Welger Maschinenfabrik GmbH, 38304 Wolfenbüttel (DE)
(72) Erfinder: Honhold, Joost, 38302 Wolfenbüttel (DE)

(56) Entgegenhaltungen:
- DE-A- 19 711 164
- DE-U- 9 211 541
- US-A- 4 569 439
- US-A- 4 956 959
- US-A- 5 181 368

## Beschreibung

Die Erfindung betrifft eine Rollballenpresse für landwirtschaftliche Halmgüter nach dem Oberbegriff des Patentanspruches 1.

Die vorstehend beschriebene Rollballenpresse lässt sich der US-A-4 956 959 entnehmen. Hier ist eine Ladeeinrichtung offenbart, die nur eine sehr begrenzte Bewegungsbahn um eine zur Zylinderachse des Pressraumes parallele Achse durchlaufen kann.

Ferner offenbart die DE 197 11 164 A1 eine Rollballenpresse mit einer Ladeeinrichtung, die von einer verriegelbaren Ruheposition, in der sich diese parallel zu einer Pressenseitenwand befindet, etwa 90° um eine vertikale Achse in eine Übergabeposition schwenkbar ist. In dieser Übergabeposition oder in angehobener Position wird die Materialbahnrolle dann von Hand aus der Ladeeinrichtung in die Abrollstation geschoben. Nachteilig hierbei ist, dass die etwa 40 kg schwere und ca. 130 cm lange Materialbahnrolle trotzdem immer noch umständlich zu handhaben ist, weil diese erst in relativ hoher Position in die Ladeeinrichtung gelegt und seitlich von der Ladeeinrichtung in die Abrollstation geschoben werden muss. Darüber hinaus hat diese Ladeeinrichtung einen relativ großen Platzbedarf unter der Schutzverkleidung der Rollballenpresse, so dass diese relativ breit baut.

Die mit der vorliegenden Erfindung zu lösende Aufgabe kann somit, ausgehend von der eingangs beschriebenen Rollballenpresse, darin gesehen werden, dass die Ladeeinrichtung eine breitere Bewegungsbahn bis zur Abrollvorrichtung durchlaufen kann, um die Materialbahnrolle aus einem niedrigeren Punkt zu laden.

Diese Aufgabe wird erfindungsgemäß durch die Merkmale im Kennzeichnungsteil des Patentanspruches 1 gelöst. Vorteilhafte Weiterbildungen ergeben sich aus den Ansprüchen 2 bis 10.

Da die Ladeeinrichtung erfindungsgemäß eine breitere Bewegungsbahn bis zur Abrollvorrichtung durchlaufen kann, lässt sich die Materialbahnrolle aus einem niedrigeren Punkt laden. Die Übergabe der Materialbahnrolleist auf einfachste Weise ohne großen Kraftaufwand und ohne Verrenkungen gewährleistet. Darüber hinaus benötigt die Ladeeinrichtung überhaupt keinen Platz im Seitenbereich der Rollballenpresse.

Um auch den Transport der Materialbahnrolle von einem Lagerort zur Rollballenpresse zu erleichtern, wird erfindungsgemäß vorgeschlagen, dass die Ladeeinrichtung als fahrbare Transporteinrichtung für die Materialbahnrolle ausgestaltet wird.

Gemäß einem weiteren Merkmal der Erfindung ist die Ladeeinrichtung leicht lös- und abnehmbar mit der Rollballenpresse verbunden, und es ist im einschubseitigen Bereich der Seitenwand der Rollballenpresse eine Halterung vorgesehen, in welche die Ladeeinrichtung gemeinsam mit der Materialbahnrolle leicht einhängbar ist.

Auf diese Weise ist der gesamte Materialbahnrollentransport vom Lagerort der Materialbahnrolle bis zu deren Verwendung in der Abrollstation mit minimalem Kraftaufwand und mit nur einer einzigen Einrichtung gewährleistet.

Nachstehend wird eine Ausführungsform der Erfindung anhand der Zeichnung beschrieben. Es zeigt:
- Fig. 1: eine Vorderansicht auf eine Rollballenpresse mit einer erfindungsgemäßen Ladeeinrichtung in in Strichlinie gezeichneter Position vor dem Einschieben in eine Abrollstation und in in Volllinie dargestellter Position in der Abrollstation,
- Fig. 2: eine schematische Teilseitenansicht auf ein Vordergehäuse der Rollballenpresse mit einer Materialbahnrolle in der Abrollstation und mit einer Vorratsrolle auf der Ladeeinrichtung in eingeschobener Position in einer Vorratsstation der Rollballenpresse,
- Fig. 3: eine Führungsschiene im Querschnitt mit aufgesetztem Laufrad der Ladeeinrichtung in der Abrollstation und
- Fig. 4: eine Führungsschiene in Draufsicht mit einer Verriegelungsklinke zum Arretieren der Ladeeinrichtung in der Abroll- oder Vorratsstation.

Die Rollballenpresse hat ein allgemein mit 1 beziffertes Fahrgestell mit Rädern 2, welches über eine Zugdeichsel 3 an einen nicht dargestellten Schlepper anzuhängen ist. Den Rädern 2 ist in Arbeitsrichtung der Rundballenpresse eine mit 4 bezifferte Aufnahmevorrichtung (Pick-up) üblicher Bauart vorgeordnet. Auf dem Fahrgestell 1 ist ein allgemein mit 5 beziffertes Pressraumgehäuse angeordnet, bestehend aus einem gestellfesten Vordergehäuse 6 mit vorderen Seitenwänden 7, 8 und einem gelenkig mit dem Vordergehäuse 6 verbundenen, nicht dargestellten Hintergehäuse, welches nach Formung eines Ballens um eine obere Schwenkachse zum Ballenausstoß aufklappbar ist.

Zwischen sich gegenüberliegenden, einander entsprechenden Seitenwänden 7, 8 erstrecken sich Presselemente in Form von Walzen 9, die umfangsseitig einen Pressraum 10 begrenzen. Es können aber auch Riemen, Stabförderketten oder Kombinationen davon sein. Desgleichen kann der Pressraum 10 einer Bauart mit konstantem oder variablem Pressraumdurchmesser sein. Der Antrieb der Presselemente erfolgt durch eine nicht dargestellte, mit einem Hauptgetriebe gekoppelte Gelenkwelle vom Schlepper aus.

Oberhalb der Presswalzen 9 ist eine Umhüllvorrichtung 11 vorgesehen, mittels welcher eine Mantelbahn durch einen Spalt 12 zwischen zwei Presswalzen 9 dem Pressraum 10 zuführbar ist, um einen fertig gepressten Rundballen formfixierend zu umhüllen. Die Mantelbahn, z. B. Netz oder Folie, wird in einer Abrollstation 13 von einer Materialbahnrolle 14 abgezogen, welche bei bekannten Abrollstationen in einem kastenförmigen Behälter 15 so gelagert ist, dass ihre Rotationsachse 16 parallel zur Zylinderachse 17 des Pressraumes 10 verläuft.

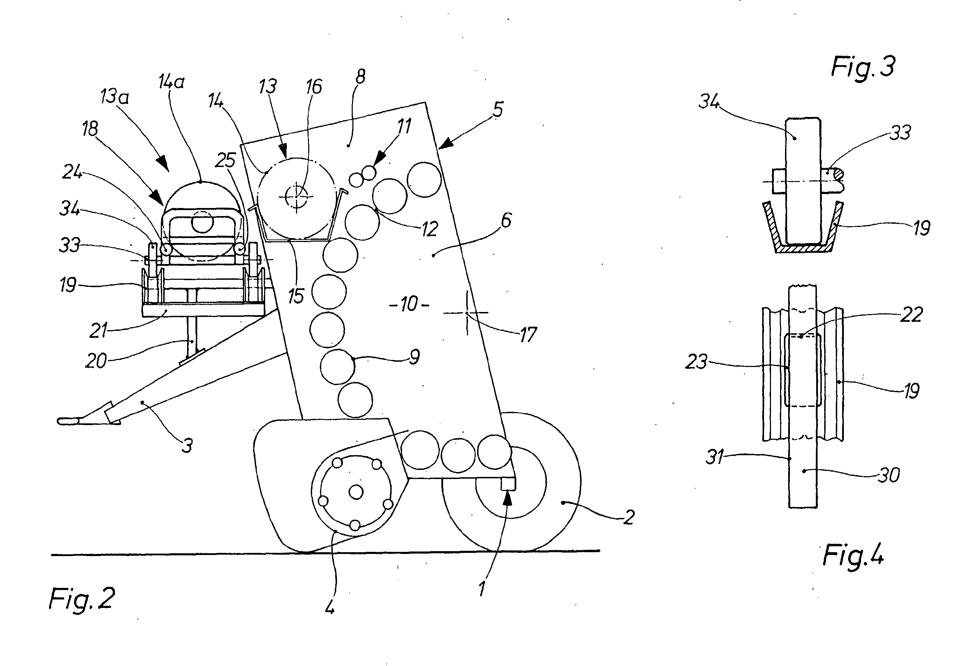

Neu ist eine Ladeeinrichtung 18, welche auf parallel zur Zylinderachse 17 des Pressraumes 10 angeordneten Führungen 19 direkt von der Seite der Rollballenpresse her vor die Umhüllvorrichtung 11 schiebbar ist. Die Ladeeinrichtung 18 und die Führungen 19 können aber auch dem an unveränderter Stelle angeordneten Behälter 15 als Vorratsstation 13a für eine Vorratsrolle 14a unmittelbar vorgelagert sein, wie am besten aus Fig. 2 ersichtlich, oder es können statt eines Behälters 15 und einer Ladeeinrichtung 18 auch zwei Ladeeinrichtungen nebeneinander oder übereinander angeordnet sein.

Die Führungen 19 haben einen trapezförmigen Querschnitt, wie aus Fig. 3 ersichtlich, sind in einem Abstand parallel nebeneinander angeordnet, der größer ist als der Durchmesser der Materialbahnrolle 14 und stützen sich über Tragwinkel 20 auf der Zugdeichsel 3 und am Vordergehäuse 6 ab. Auf der Einschubseite der Ladeeinrichtung 18 sind die Führungen 19 etwa um 45° nach unten abgewinkelt und durch ein Winkeleisen 21 verbunden, dessen freie Schenkel nach oben weisen, um eine Haltekante 22 der Ladeeinrichtung 18 dort einzuhängen. Am anderen Ende weist jede Führung 19 rechteckförmige Ausnehmungen 23 auf, welche die Haltekante 22 durchgreift zum Arretieren der Ladeeinrichtung 18 in der Abroll- 13 oder Vorratsstation 13a, s. Fig. 4.

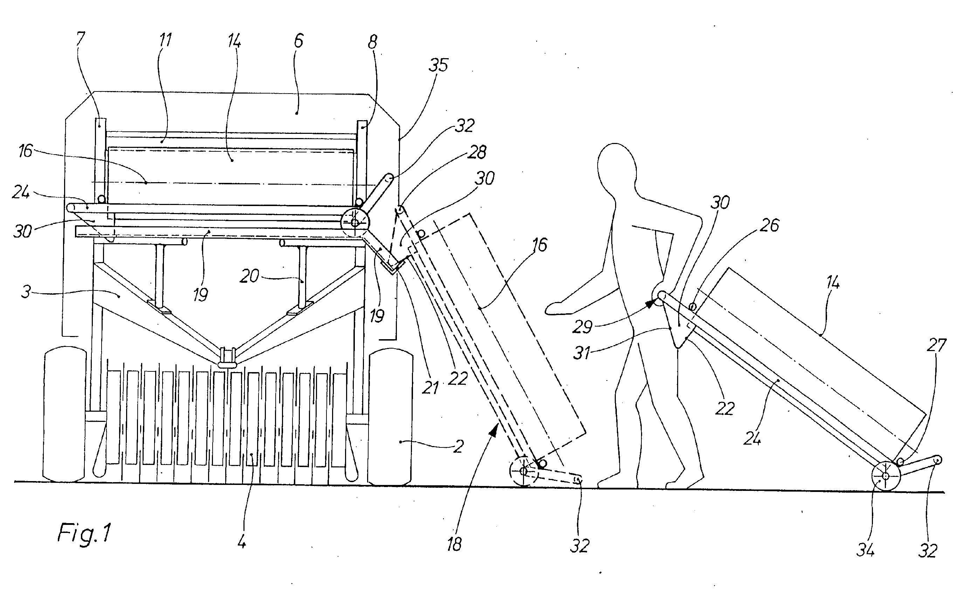

Die Ladeeinrichtung 18 besteht aus einem rechteckförmigen Rohrrahmen, welcher zwischen sich die Materialbahnrolle 14 so aufnimmt, dass sich diese auf zwei Längsrohren 24, 25 abstützt, welche in einem seitlichen Abstand voreinander angeordnet sind, welcher kleiner ist als der Durchmesser der Materialbahnrolle 14, während die Materialbahnrolle 14 in axialer Richtung jeweils durch einen an den Stirnseiten angreifenden Anschlag 26, 27 gegen Verrutschen gehalten wird. Die Längsrohre 24, 25 sind auf der Einschubseite der Ladeeinrichtung 18 länger ausgeführt als dies der Länge der Materialbahnrolle 14 entspricht und durch ein Querrohr 28 miteinander verbunden, welches gleichzeitig einen Handgriff 29 bildet. An den überstehenden Rohrabschnitten ist jeweils eine nach unten weisende Nase 30 befestigt, die rechtwinklig zum Rohr 24, 25 eine Haltekante 22 zum Halten der in das Winkeleisen 21 eingehängten Ladeeinrichtung 18 aufweist und eine Auflaufschräge 31 zum Verschieben auf den Führungen 19. Anstelle der Nase 30 können bei entsprechender Gestaltung des Winkeleisens 21 auch Laufräder verwendet werden. Auf der der Einschubseite gegenüberliegenden Seite der Ladeeinrichtung 18 sind beide Längsrohre 24, 25 etwa auf Höhe der Stirnseite der Materialbahnrolle 14 ca. 45° nach oben abgewinkelt und weisen endseitig ein Querrohr 32 als Verbindung auf, welches ebenfalls als Handgriff ausgebildet ist. Beide Längsrohre 24, 25 weisen unterhalb des Anschlages 27 jeweils nach außen weisende, rechtwinklig zu den Rohraußenseiten angeordnete Achsstummel 33 mit Laufrädern 34 auf, die so angeordnet sind, dass die Ladeeinrichtung 18 auf den Führungen 19 leicht in die Endpositionen der Abroll- 13 oder Vorratsstation 13a schiebbar ist und gemäß gestrichelter Darstellung in Fig. 1 in entnommenem Zustand auf dem Erdboden zum Transport der Materialbahnrolle 14 verfahrbar ist.

Die Funktion der Ladeeinrichtung 18 ist wie folgt: Ist eine Materialbahnrolle 14 in der Rollballenpresse aufgebraucht, so wird die Ladeeinrichtung 18 aus der Abroll- 13 bzw. der Vorratsstation 13a herausgezogen, zum Lagerort der Materialbahnrollen gefahren und dort mit einer Materialbahnrolle 14 beladen. Die relativ schwere, sperrige Materialbahnrolle 14 wird mittels der Ladeeinrichtung 18 leicht an einer Hand zur Rollballenpresse gefahren und dort mit ihrer Haltekante 22 in das Winkeleisen 21 eingehängt. Die Ladeeinrichtung 18 wird an dem Handgriff 32 in eine etwa horizontale Position bewegt und auf den Führungen 19 in die Abroll- 13 bzw. Vorratsstation 13a geschoben. Zum Anheben und/oder Einschieben der Ladeeinrichtung 18 können auch nicht dargestellte Hilfsantriebe eingesetzt werden. Eine einzige Ladeeinrichtung 18 ist somit sowohl als Abroll- 13 oder Vorratsstation 13a nutzbar und dient gleichzeitig zum Einschieben der Materialbahnrolle 14, 14a in die Abroll- 13 oder Vorratsstation 13a und als Transporteinrichtung vom Lagerort zur Rollballenpresse, wodurch der Kraftaufwand des Bedieners minimiert wird. Wie aus Fig. 1 ersichtlich, baut die seitliche Schutzverkleidung 35 relativ schmal, weil erfindungsgemäß kein Platzbedarf für die Materialbahnrolle 14 notwendig ist.

## Patentansprüche

1. Rollballenpresse für landwirtschaftliche Halmgüter mit einer außerhalb eines Pressraumes (10) an einem Pressraumgehäuse (5) parallel zu einer Umhüllvorrichtung (11) angeordneten Abrollstation (13) für eine Materialbahnrolle (14) und einer Ladeeinrichtung (18) für die Materialbahnrolle (14), wobei die Ladeeinrichtung (18) zusammen mit der Materialbahnrolle (14, 14a) in die Abrollstation (13) oder eine Vorratsstation (13a) bewegbar ist, **dadurch gekennzeichnet, dass** parallel zur Zylinderachse (17) des Pressraumes (10) angeordnete Führungen (19) vorgesehen sind, auf denen die Ladeeinrichtung (18) verschieb- oder verfahrbar ist.

2. Rollballenpresse nach Anspruch 1, **dadurch gekennzeichnet, dass** die Führungen (19) im Bereich einer Seitenwand (8) der Rundballenpresse nach außen und unten abgewinkelt sind.

3. Rollballenpresse nach einem der vorhergehenden Ansprüche, **dadurch gekennzeichnet, dass** Sicherungsmittel (22, 23) vorgesehen sind zum Arretieren der Ladeeinrichtung (18) in der Abroll-(13) oder Vorratsstation (13a).

4. Rollballenpresse nach einem der vorhergehenden Ansprüche, **dadurch gekennzeichnet, dass** die Abrollstation (13) einen einfachen Behälter (15) zur Aufnahme einer Materialbahnrolle (14) aufweist und parallel dazu eine Vorratsstation (13a) angeordnet ist, in welche eine Vorratsrolle (14a) zusammen mit der Ladeeinrichtung (18) einschiebbar ist, wobei die Vorratsrolle (14a) leicht und einfach von der Vorratsstation (13a) in die Abrollstation (13) überführbar ist.

5. Rollballenpresse nach einem der vorhergehenden Ansprüche, **dadurch gekennzeichnet, dass** die Ladeeinrichtung (18) um eine horizontale, rechtwinklig zur Zylinderachse (17) des Pressraumes (10) gelegene Achse verschwenkbar ist.

6. Rollballenpresse nach einem der vorhergehenden Ansprüche, **dadurch gekennzeichnet, dass** die Ladeeinrichtung (18) als fahrbare Transporteinrichtung für die Materialbahnrolle (14, 14a) ausgestaltet ist.

7. Rollballenpresse nach Anspruch 6, **dadurch gekennzeichnet, dass** die Ladeeinrichtung (18) leicht lös- und abnehmbar mit der Rollballenpresse verbunden ist, und dass im einschubseitigen Bereich der Seitenwand (8) der Rollballenpresse eine Halterung (21) vorgesehen ist, in welche die Ladeeinrichtung (18) gemeinsam mit einer Materialbahnrolle (14, 14a) leicht einhängbar ist.

8. Rollballenpresse nach Anspruch 6 oder 7, **dadurch gekennzeichnet, dass** die Ladeeinrichtung (18) als Tragelement (24, 25, 28, 32) für die Materialbahnrolle (14, 14a) ausgebildet ist und Mittel (26, 27) vorgesehen sind, welche die Materialbahnrolle (14, 14a) wenigstens an den Stirnseiten gegen Wegrutschen in axialer Richtung halten.

9. Rollballenpresse nach einem der Ansprüche 6 bis 8, **dadurch gekennzeichnet, dass** die Ladeeinrichtung (18) wenigstens einen Handgriff (29) zum Ziehen, einen Handgriff (32) zum Einschieben in die Abroll- (13) oder Vorratsstation (13a) und Laufräder (34) aufweist.

10. Rollballenpresse nach einem oder mehreren der vorhergehenden Ansprüche, **dadurch gekennzeichnet, dass** hydraulische, mechanische, elektrische und/oder pneumatische Antriebe zum Überführen der Ladeeinrichtung (18) in die Abroll- (13) und/oder Vorratsstation (13a) vorgesehen sind.

## Claims

1. A roll baler for agricultural stalk material, with an unrolling station (13) for a roll of material web (14), arranged outside a bale chamber (10) on a bale chamber housing (5) and parallel to a wrapping device (11), and a loading means (18) for the roll of material web (14), the loading means (18) together with the roll of material web (14, 14a) being movable into the unrolling station (13) or a supply station (13a), **characterised in that** guides (19) arranged parallel to the cylinder axis (17) of the bale chamber (10) are provided on which the loading means (18) is displaceable or movable.

2. A roll baler according to Claim 1, **characterised in that** the guides (19) are bent outwards and downwards in the region of a side wall (8) of the round baler.

3. A roll baler according to one of the preceding claims, **characterised in that** securing means (22, 23) are provided for locking the loading means (18) in the unrolling (13) or supply station (13a).

4. A roll baler according to one of the preceding claims, **characterised in that** the unrolling station (13) has a simple container (15) for receiving a roll of material web (14) and a supply station (13a) is arranged parallel thereto, into which a supply roll (14a) can be inserted together with the loading means (18), the supply roll (14a) being able to be transferred simply and easily from the supply station (13a) into the unrolling station (13).

5. A roll baler according to one of the preceding claims, **characterised in that** the loading means (18) can be pivoted about a horizontal axis, located at right-angles to the cylinder axis (17) of the bale chamber (10).

6. A roll baler according to one of the preceding claims, **characterised in that** the loading means (18) is designed as a movable transport means for the roll of material web (14, 14a).

7. A roll baler according to Claim 6, **characterised in that** the loading means (18) is connected to the roll baler in a readily detachable and removable manner, and that a holder (21) is provided in the insertion-side region of the side wall (8) of the roll baler, in which the loading means (18) can be readily suspended together with a roll of material web (14, 14a).

8. A roll baler according to Claim 6 or 7, **characterised in that** the loading means (18) is designed as a supporting element (24, 25, 28, 32) for the roll of material web (14, 14a) and means (26, 27) are provided which hold the roll of material web (14, 14a) at least at the end faces against slipping away in the axial direction.

9. A roll baler according to one of Claims 6 to 8, **characterised in that** the loading means (18) has at least one handle (29) for pulling, a handle (32) for inserting into the unrolling (13) or supply station (13a), and wheels (34).

10. A roll baler according to one or more of the preceding claims, **characterised in that** hydraulic, mechanical, electric and/or pneumatic drives are provided for transferring the loading means (18) into the unrolling (13) and/or supply station (13a).

## Revendications

1. Presse à balles rondes pour les chaumes agricoles, comportant un poste de déroulement (13), monté sur un carter (5) de la chambre de formage de la balle (10), en dehors de la chambre de formage de la balle (10) parallèlement à un dispositif d'enrubannage (11), pour une bobine de matériau en bande (14), et un dispositif de chargement (18) pour la bobine de matériau en bande (14), ledit dispositif de chargement (18) pouvant être déplacé conjointement avec la bobine de matériau en bande (14, 14a) vers le poste de déroulement (13) ou un poste d'approvisionnement (13a), **caractérisée en ce qu'**il est prévu des guidages (19), qui sont disposés parallèlement à l'axe (17) du cylindre formé par la chambre de formage de la balle (10), et sur lesquels le dispositif de chargement (18) peut coulisser ou se déplacer.

2. Presse à balles rondes selon la revendication 1, **caractérisée en ce que** les guidages (19) sont coudés vers l'extérieur et le bas dans la zone d'une paroi latérale (8) de la presse à balles rondes.

3. Presse à balles rondes selon l'une quelconque des revendications précédentes, **caractérisée en ce qu'**il est prévu des moyens de blocage (22, 23) destinés à immobiliser le dispositif de chargement (18) dans le poste de déroulement (13) ou le poste d'approvisionnement (13a).

4. Presse à balles rondes selon l'une quelconque des revendications précédentes, **caractérisée en ce que** le poste de déroulement (13) comporte un caisson (15) simple, destiné à recevoir une bobine de matériau en bande (14) et parallèlement à celui-ci est disposé un poste d'approvisionnement (13a), dans lequel une bobine de réserve (14a) peut être introduite conjointement avec le dispositif de chargement (18), la bobine de réserve (14a) pouvant être transférée aisément et simplement depuis le poste d'approvisionnement (13a) dans le poste de déroulement (13).

5. Presse à balles rondes selon l'une quelconque des revendications précédentes, **caractérisée en ce que** le dispositif de chargement (18) est apte à pivoter autour d'un axe horizontal, orienté perpendiculairement à l'axe (17) du cylindre formant la chambre de formage de la balle (10).

6. Presse à balles rondes selon l'une quelconque des revendications précédentes, **caractérisée en ce que** le dispositif de chargement (18) est réalisé sous la forme d'un dispositif de transport guidable pour la bobine de matériau en bande (14, 14a).

7. Presse à balles rondes selon la revendication 6, **caractérisée en ce que** le dispositif de chargement (18) est assemblé à la presse à balles rondes de manière aisément amovible et détachable et **en ce que**, dans la zone d'introduction de la paroi latérale (8) de la presse à balles rondes, il est prévu une fixation (21), à laquelle le dispositif de chargement (18), conjointement avec une bobine de matériau en bande (14, 14a), peut être suspendu aisément.

8. Presse à balles rondes selon la revendication 6 ou 7, **caractérisée en ce que** le dispositif de chargement (18) est réalisé sous la forme d'un élément de support (24, 25, 28, 32) pour la bobine de matériau en bande (14, 14a) et il est prévu des moyens (26, 27), par lesquels la bobine de matériau en bande (14, 14a) est maintenue dans la direction axiale, au moins au niveau des faces frontales, pour empêcher tout glissement.

9. Presse à balles rondes selon l'une quelconque des revendications 6 à 8, **caractérisée en ce que** le dispositif de chargement (18) comporte au moins une poignée (29) pour le tirer, une poignée (32) pour l'introduire dans le poste de déroulement (13) ou le poste d'approvisionnement (13a), et des roues (34).

10. Presse à balles rondes selon l'une quelconque des revendications précédentes, **caractérisée en ce qu'**il est prévu des systèmes d'entraînement hydrauliques, mécaniques, électriques et/ou pneumatiques pour transférer le dispositif de chargement (18) dans le poste de déroulement (13) et/ou le poste d'approvisionnement (13a).
